Europäisches Patentamt

(19) European Patent Office

Office européen des brevets

(11) Publication number: 0 285 825 B1

# EUROPEAN PATENT SPECIFICATION

(12)

(45) Date of publication of patent specification:
02.01.91 Bulletin 91/01

(51) Int. Cl.⁵: **F01D 21/00, F23C 11/02,**
**F02C 3/20**

(21) Application number: 88103470.6

(22) Date of filing: 05.03.88

(54) **Power plant for burning a fuel at high pressure and a gas turbine driven by the combustion gases.**

(30) Priority: 09.03.87 SE 8700960

(43) Date of publication of application:
12.10.88 Bulletin 88/41

(45) Publication of the grant of the patent:
02.01.91 Bulletin 91/01

(84) Designated Contracting States:
AT BE DE ES FR GB IT NL

(56) References cited:
SE-B- 431 359
SE-B- 431 360

(73) Proprietor: ABB STAL AB
S-612 20 Finspång (SE)

(72) Inventor: Mansson,Martin
Ragangen 22
S-612 00 Finspong (SE)
Inventor: Torstenfelt,Ragnar
Tunnlandsvagen 3
S-612 00 Finspong (SE)

(74) Representative: Boecker, Joachim, Dr.-Ing.
Rathenauplatz 2-8
D-6000 Frankfurt a.M. 1 (DE)

## Description

The invention relates to a power plant for burning a fuel at high pressure and a gas turbine driven by the combustion gases according to the precharacterising part of Claim 1. The turbine is generally connected to a second load object, usually a generator connected to a power grid.

The invention is primarily intended for a PFBC power plant for burning coal or other fuel in a fluidized bed of particle material containing sulphur absorber. PFBC is the abbreviation of the term Pressurized Fluidized Bed Combustion. The combustion chamber with the fluidized bed is generally located in a bed vessel surrounded by a pressure vessel. The space inside the pressure vessel and outside bed vessel then contains compressed combustion air.

The great energy content in the fluidized bed in a PFBC power plant entails particular problems at the occurrence of a load drop and tripping of the gas turbine. The supply of energy from the combustion chamber must than be rapidly cut off to prevent the speed of the turbine increasing dangerously. Shut-down valves are provided in the hot-gas pipe between bed vessel and turbine and in the air duct between compressor and bed vessel or a pressure vessel surrounding the bed vessel. The plant also includes a by-pass conduit or short-circuit pipe between the hot-gas pipe and the air duct. This by-pass conduit contains a valve which, when the gas turbine trips, opens to provide direct communication between compressor and turbine. SE-A-8604034-2 (corresponding to EP-A-87100752.2) describes a PFBC power plant of this type, and how such a plant can be controlled in the event of the gas turbine tripping at a load drop.

The invention aims at developing a power plant of the aforementioned kind, that operates with great reliability and can be built in a very compact, space-saving manner.

To achieve this aim the invention suggests a power plant according to the introductory part of Claim 1, which is characterized by the features of the characterizing part of Claim 1.

Further developments of the invention are characterized by the features of the additional claims.

The valve unit may comprise a valve housing, a cylinder located centrally therein and forming passage for the hot combustion gases from the bed vessel. The cylinder may contain one or more valves. Between the cylinder and the turbine housing may be an annular channel or a plurality of channels forming a passage for compressed air from the compressor. In one embodiment with an annular channel two or more shut-off valves are arranged in parallel. In an embodiment with two or more parallel channels, a valve is suitably provided in each channel, but there may be more than one valve in each channel. Furthermore, two or more connections with valves are provided between the air duct(s) and the passage through the cylinder. The valve discs in the valves in the air duct(s) and the valve discs in the valves in the connection between the air duct(s) and the cylinder are arranged on a common operating rod and are operated by one and the same control means. To close the valve in the air duct even if these operating devices are out of function, the valve disc in the valve in the air duct is arranged axially displaceable on the operating rod and is held in its normal position by a spring. If an operating member does not function, the pressure on the upstream side of the valve will drop, whereas the pressure on its downstream side will remain substantially unchanged. Compressed combustion air in the air duct and pressure vessel will thus endeavour to flow back through the valve. The pressure difference between the two sides of the valve disc produces a force which exceeds the spring force and effects displacement of the valve disc to the closed position against the valve seat. The valve in the combustion-air channel thus functions as a non-return valve in the event of its control device mal-functioning. This increases the reliability of the valve unit.

The invention will now be described in greater detail with reference to the accompanying drawings showing - by way of example - in

Figure 1 schematically a PFBC power plant in which the invention can advantageously be utilized,

Figure 2 a view of a gas-turbine/compressor unit with a valve means according to the invention,

Figure 3 a section through the valve means according to the invention.

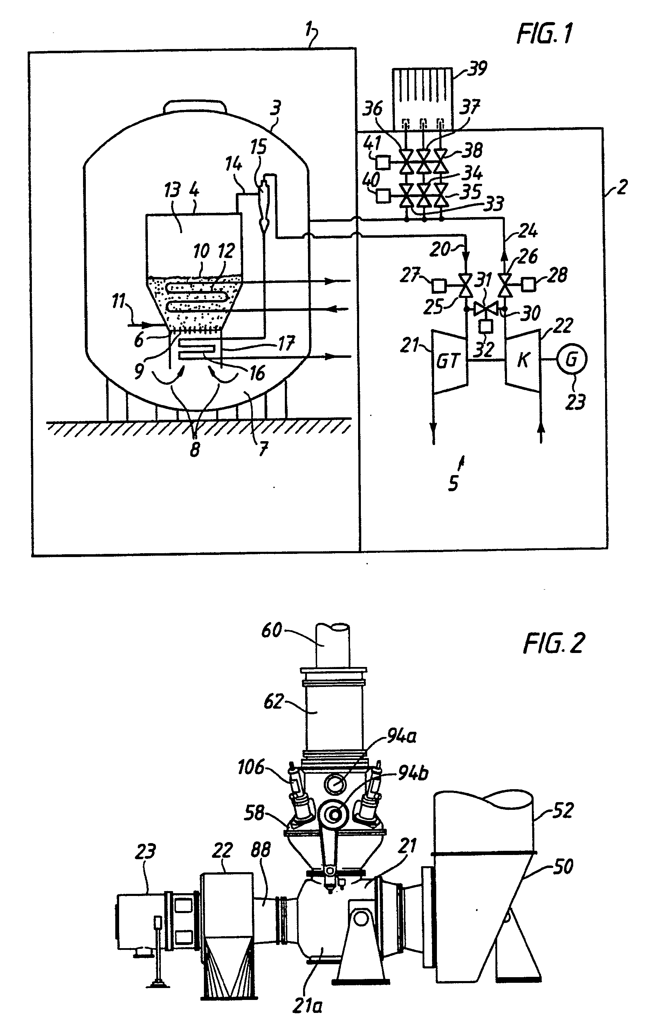

In Figures 1 to 3, 1 and 2 denote buildings containing a pressure vessel 3 with a bed vessel 4, and a turbine/compressor installation 5, respectively. The bed vessel 4 has a bottom 6 with nozzles 9 through which the bed vessel 4 is supplied with combustion air from the space 7 between the bed vessel 4 and the pressure vessel 3, as indicated by the arrows 8. The bed vessel 4 contains a bed 10 of particle material. Air flowing in through the nozzles 9 fluidizes the material in the bed 10 and burns the fuel supplied to the bed through a fuel pipe 11. A set of tubes 12 is provided in the bed vessel 4 to generated steam for driving a steam turbine, not shown, and to cool the bed 10 so that the temperature is maintained at a level suitable for combustion, usually in the region of 800-950°C. The combustion gases are collected in the space 13 above the bed 10 and are conducted through a pipe 14 to a dust separator symbolized by a cyclone 15. Separated dust is withdrawn through the pressure-reducing feed-out means 16 in the form of a cooler. This may be placed in a shaft or channel 17 below the bottom 6 of the bed vessel 4, as shown in Figure 1. The combustion air acts as a coolant and is thereby pre-heated prior to entering the bed vessel.

The combustion gases are conveyed through a pipe 20 to a gas turbine 21 which drives a compressor 22 and a generator 23. From the compressor 22 compressed air is conveyed through pipe 24 to the space 7. Shut-off valves 25 and 26 are provided in the pipes 20 and 24, respectively, and are operated by control means 27 and 28, respectively. Between the pipes 20 and 24 is a by-pass or short-circuit pipe 30 with a valve 31 operated by a control device 32. The pipe 30 is connected to pipe 20 between valve 25 and gas-turbine 21 and to pipe 24 between valve 26 and compressor 22. A number of blow-off valves 33,34 and 35 are connected to the air duct 24, and with their outlets these valves are each connected to a test valve 36,37 and 38. The blow-off valves and the test valves, respectively, are operated in groups by a common control means 40 and 41, respectively, or by separate control devices. A silencer 39 for the blow-off air is provided on the building 2. The valves 33 to 35 may alternatively be con nected directly to the pressure vessel or to the shaft 17 in such a manner that the ash cooler 16 is cooled by an air flow even during blow-off. The plant may be provided with an inert gas system, not shown, from which the pressure vessel and/or bed vessel can be supplied with inert gas during blow-off.

In the event of a disturbance in the gas-turbine/compressor unit, e.g. if a turbine trips due to loss of load, the valves 25 and 26 in pipes 20 and 24 will be closed and at the same time valve 31 in by-pass pipe 30 will be opened thus providing a short-circuit between compressor 22 and gas-turbine 21. Leakage of hot gas through the valve 25 cannot be prevented and thus a certain amount of energy is still supplied to the turbine 21.

If the disturbance cannot be rectified and normal operation can not be resumed within a short time, the whole plant must be taken out of operation. Since valve 25 in the hot-gas pipe 20 is subjected to high temperature, complete sealing is impossible. A gradual pressure drop is obtained in the bed vessel due to leakage in the valve 25. At the same time air is blown off from the space 7, one or more of the valves 33 to 35 having been opened. The test valves 36 to 38 are normally open and are only closed when the valves 33 to 35 are being function-tested or when one of these valves fails.

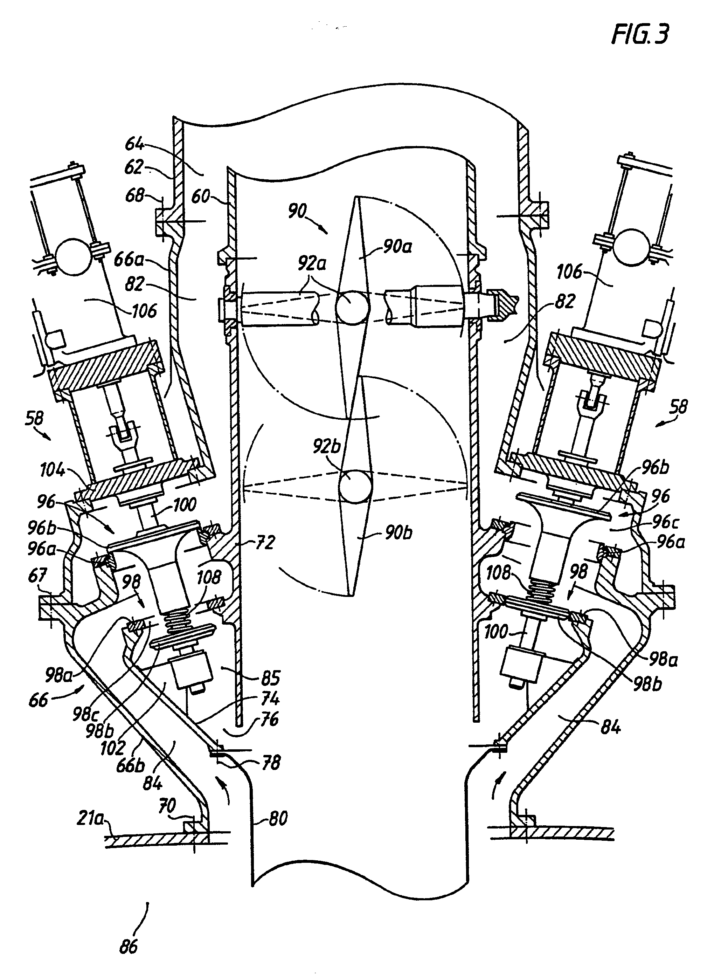

The gas-turbine/compressor unit shown in Figure 2 comprises the gas turbine 21, compressor 22 and generator 23, which may also serve as start motor. The gas outlet 50 from the turbine 21 is connected via a pipe 52 to an exhaust boiler, not shown, where the residual heat in the gases leaving the turbine 21 is utilized. The valves 25,26,31 shown in Figure 1 are combined to a single unit 58 directly joined to the gas-turbine housing 21a. This is provided in a manner not shown, with channels conducting combustion gases to the gas inlet of the turbine 21 and compressed air from the valve unit 58 of the compressor 22. As shown in Figures 2 and 3, the hot-gas pipe 20 from the dust separator 15 to the turbine and the pipe 24 for compressed combustion air from the compressor 21 to the pressure vessel 3 comprise two concentric pipes 60 and 62, respectively. Pipe 60 thus corresponds to pipe 20 and the gap 64 between pipes 60 and 62 corresponds to pipe 24.

As shown in Figure 3, the valve unit 58 consists of a valve housing 66 composed of an upper part 66a and a lower part 66b with a bolted joint 67. The upper part 66a is connected to the pipe 62 by a bolted joint 68. The lower part 66b is connected to the turbine housing 21a by a bolted joint 70. Inside the housing is a cylinder 72, joined to the housing and connected at its top to the pipe 60. The cylinder 72 is provided internally with an inner insulating layer, not shown. To the lower part 66b of the housing 66 a part 74 connected. Between this part 74 and the cylinder 72 a space 76 is formed. The part 74 is connected by a bolted joint 78 to a pipe 80 which is connected to the turbine inlet inside the turbine housing 21a. An annular gap 82 is formed between the upper part 66a of the valve housing and the cylinder 72, and a similar annular gap 84 is formed between the lower part 66b of the valve housing and the part 74. The channel 84 and the cylinder 72 may communicate via the space 85 and gap 76. The outlet 88 from the compressor 22 is connected to the gas-turbine housing 21a and connects the compressor to the channel 84 via space 86 in the turbine housing 21a.

Three valves 90,96,98 corresponding to valves 25,26,31 in Figure 1 are arranged in the valve unit 58. In the cylinder 72 is a valve 90 with two valve discs 90a and 90b arranged in series, corresponding to valve 25. These valve discs are applied on shafts 92a and 92b, respectively, and can be turned 90°. It is impossible to obtain complete sealing against the cylinder 72, and therefore there will be a slight flow of gas in the closed position of the valve discs. The valve discs are operated by control means 94a and 94b as shown in Figure 2.

Equivalents to valves 26 and 31 are arranged in the lower part 66b of the valve housing 66 and comprise a plurality, e.g. 2,3 or 4, of valves 96 and 98, respectively, arranged in parallel, two being shown in Figure 3. On the righthand side of the figure the valve 96 is open and the valve 98 closed, exhibiting their positions during normal operation. On the lefthand side of the figure the valve 96 is closed and the valve 98 is open exhibiting their positions in the event of a gas-turbine trip with a short-circuit between the compressor and the gas-turbine. These valves 96,98 have seats 96a and 98a, respectively, in the housing part 66b, and valve discs 96b and 98b, respectively, cooperating therewith and arranged on a common operating rod 100 journalled in bracket 102 and disc 104, respectively. The operating rod 100 (spindle) is connected to a operating device 106 common to the two valves 96 and 98. The valve disc 96b is axially displaceable on the rod 100 and is influenced in upward direction by a spring 108 to a normal position as shown in Figure 3. The valve disc 98b is permanently secured to the rod 100.

When the PFBC power plant is in operation, valve 90 will be open and the valve discs 90a and 90b in the position shown in Figure 3. Propellant gas from the bed vessel 4 flows through pipe 60, corresponding to pipe 20 in the schematically drawn Figure 1, cylinder 72 and pipe 80 to the turbine inlet. Compressed combustion air from the compressor 2 flows into space 86 in the turbine housing 21a and then through gap 84, opening 96c in valve 96, gap 82 and gap 64 between the pipes 60 and 62, to the pressure vessel 3 and from here to the bed vessel 4, as shown in the righthand part of Figure 3.

In the event of a gas-turbine trip, the valve discs 90a and 90b will be turned 90°, thus closing valve 90. At the same time valves 96 will be moved from open to closed position and valves 98 from closed to open position by means of their common operating device 106, i.e. valve discs 96a and 98a are moved from the position shown in the righthand part of Figure 3 to that shown in the lefthand part. The flow of propellant gas through valve 90 is reduced to leakage flow. Compressed combustion air from compressor 22 flows through space 86, gap 84, valve opening 98c in valves 98, space 85, gap 76 and pipe 80, directly to the turbine, together with the leakage gas passing through the closed valves 90 which are not fully sealed. The energy supply from the bed vessel 4 ceases substantially entirely and the turbine is prevented from accelerating when generator 23 is disconnected and the load thus suddenly drops. Closing valves 96 prevents compressed combustion air in the pressure vessel 3 from flowing back and acting as propellant gas for the turbine.

The provision of several valves 96 and 98 in parallel, and an axially movable valve disc 96b on the rod 100, ensures good security against faults of an operating device which would entail failure of the operation movement. In the event of control device 106 not functioning, valve 96 will in any case close. A rapid drop in pressure is obtained when the other valves 96 open. A considerable pressure difference is obtained between channel 82 and channel 84 and thus on each side of the valve disc 96b. The force obtained exceeds the force of the spring 108 and displaces valve disc 96b downwards to cooperate with valve seat 96a, thus closing the valve opening 96c. Valve 98 remains closed. That one valve 98 out of four does not open entails no great risk. It merely increases somewhat the resistance in the short-circuit connection between compressor 52 and turbine 50. Besides providing increased safety, the division of the valve unit 58 into two valve functions with a plurality of valve units 96 and 98 arranged in parallel also means that the valve unit 58 can be made very compact and thus requires little space.

## Claims

1. Power plant comprising
a combustion chamber (4) for burning a fuel at a pressure exceeding atmospheric pressure,
a gas turbine (21) driven by the combustion gases generated,
a compressor (22) driven by the gas turbine (21) for compression of combustion air,
a first gas conduit (20 ;60) for conveying combustion gases from the combustion chamber (4) to the turbine (21),
a second gas conduit (24 ;64) for conveying combustion air from the compressor (22) to the combustion chamber (4),
shut-off valves (25,90 ;26,96) arranged in said conduits, and
a short-circuit connection (30,85) with a valve (31 ;98) between the compressor (22) and turbine (21)
**characterized** in that at least one valve (90) in the first conduit (60) for combustion gases, two or more valves (96) arranged in parallel in the second conduit (64) for combustion air and two or more valves (98) arranged in the short-circuit connection (76 ;85) form a single valve unit (58).

2. Power plant according to Claim 1, **characterized** in that the valve unit (58) comprises
a valve housing (66),
a through-cylinder (72) located centrally the valve housing (66),
a valve (90) in this cylinder (72),
a channel (82,84) formed by the housing (66) and the cylinder (72), arranged around the cylinder (72), and passing through the valve unit (58),
two or more valves (96) arranged in parallel in this channel,
a communication (76,85) between said channel (82,84) and the cylinder (72), and
two or more valves (98) arranged in this communication.

3. Power plant according to Claim 1, **characterized** in that the valve unit comprises
a cylinder (72) passing through the unit,
a valve (90) in cylinder (72),
two or more channels (82,84) arranged around the cylinder,
a valve (96) in each of these channels (82,84),
a communication (76,85) between each of these channels (82,84) and the cylinder (72), and
a valve (98) in each of these communications (76,85).

4. Power plant according to any of Claims 2 or 3, **characterized** in that the valves (96) in said channel(s) (82,84) arranged about the cylinder and the valves (98) in said communications (76,85) between the channel(s) (82,84) and the cylinder (72) are provided with valve discs (96b,98b) arranged on a common rod (100) (spindle) and operated by a common operating device (106).

5. Power plant according to Claim 4,. **characterized** in that the valve discs (96b) in the valves (96) in the channel(s) (82,84) about the cylinder (72) are axially displaceable on said rod (100) and are influenced in one direction by a spring (108) which retains the valve disc (96b) in a normal position in relation to the rod (100).

## Ansprüche

1. Kraftwerksanlage mit
einer Brennkammer (4) zur Verbrennung von Brennstoff bei einem über Atmosphärendruck liegenden Druck,
einer Gasturbine (21), die von den erzeugten Verbrennungsgasen angetrieben wird,
einem Kompressor (22), der von der Gasturbine (21) zur Verdichtung von Verbrennungsluft angetrieben wird,
einer erste Gasleitung (20 ;60) zum Transport von Verbrennungsgasen aus der Brennkammer (4) zur Turbine (21),
einer zweite Gasleitung (24 ;64) zum Transport von Verbrennungsluft vom Kompressor (22) zur Brennkammer (4),
Absperrventilen (25,90 ;26,96), die in den genannten Leitungen liegen, und
einer Kurzschlußverbindung (30,85) mit einem Ventil (31 ;98) zwischen dem Kompressor (22) und der Turbine (21),
**dadurch gekennzeichnet,** daß zumindest ein Ventil (90) in der ersten Leitung (60) für Verbrennungsgase, zwei oder mehr Ventile (96), die parallel zueinander in der zweiten Leitung (64) für Verbrennungsluft angeordnet sind, und zwei oder mehr Ventile (98), die in der Kurzschlußverbindung (76 ;85) angeordnet sind, eine einzige Ventileinheit (58) bilden.

2. Kraftwerksanlage nach Anspruch 1, **dadurch gekennzeichnet,** daß zu der Ventileinheit (58) gehören
ein Ventilgehäuse (66),
ein durchgehender Zylinder (72), der zentral im Ventilgehäuse (55) angeordnet ist,
ein Ventil (90) in diesem Zylinder (72),
ein von dem Gehäuse (66) und dem Zylinder (72) geformter Kanal (82,84), der sich um den Zylinder (72) und durch die Ventileinheit (58) erstreckt,
zwei oder mehr zu diesem Kanal parallel angeordnete Ventile (96),
eine Verbindung (76,85) zwischen dem genannten Kanal (82,84) und dem Zylinder (72), und

zwei oder mehr Ventile (98), die in der genannten Verbindung angeordnet sind.

3. Kraftwerksanlage nach Anspruch 1, **dadurch gekennzeichnet,** daß zu der Ventileinheit gehören
ein durch die Einheit hindurchführender Zylinder (72),
ein im Zylinder (72) angeordnetes Ventil (90),
zwei oder mehr Kanäle (82,84), die um den Zylinder herum angeordnet sind,
ein Ventil (96) in jedem dieser Kanäle (82,84), eine verbindung (76,85) zwischen jedem dieser Kanäle (82,84) und dem Zylinder (72), und
ein Ventil (98) in jeder dieser Verbindungen (76,85).

4. Kraftwerksanlage nach einem der Ansprüche 2 oder 3, **dadurch gekennzeichnet,** daß die Ventile (96) in dem genannten Kanal/den genannten Kanälen (82,84), die um den Zylinder herum angeordnet sind, und die Ventile (98) in den genannten Verbindungen (76,85) zwischen dem Kanal/den Kanälen (82,84) und dem Zylinder (72) mit Ventilscheiben (96b,98b) versehen sind, die auf einer gemeinsamen Stange (100) (Spindel) angeordnet sind und durch eine gemeinsame Betätigungsvorrichtung (106) betätigt werden.

5. Kraftwerksanlage nach Anspruch 4, **dadurch gekennzeichnet,** daß die Ventilscheiben (96b) und die Ventile (96) in dem Kanal/den Kanälen (82,84) um den Zylinder (72) herum in axialer Richtung au der genanten Stange (100) verschiebbar sind und in einer Richtung unter der Wirkung einer Feder (108) stehen, welche die Ventilscheibe (96b) in einer Normalstellung relativ zur Stange (100) hält.

## Revendications

1. Installation de production d'énergie comprenant
une chambre de combustion (4) destinée à brûler un combustible à une pression supérieure à la pression atmosphérique,
une turbine à gaz (21) qui est entraînée par les gaz de combustion qui sont produits,
un compresseur (22) qui est entraîné par la turbine à gaz (21) pour comprimer l'air de combustion,
un premier conduit de gaz (20 ;60) pour acheminer des gaz de combustion de la chambre de combustion (4) vers la turbine (21),
un second conduit de gaz (24 ;64) pour acheminer de l'air de combustion du compresseur (22) vers la chambre de combustion (4),
des vannes d'arrêt (25,90 ;26,96) montées dans ces conduits, et un passage de court-circuit (30,85) équipé d'une vanne (31 ;98) entre le compresseur (22) et la turbine (21),
caractérisée en ce qu'au moins une vanne (90) dans le premier conduit (60) pour les gaz de combustion, deux vannes ou plus (96) disposées en parallèle dans le second conduit (64) pour l'air de combustion, et deux vannes ou plus (98) disposées dans le passage de court-circuit (76 ;85) forment une seule structure de vannes (58).

2. Installation de production d'énergie selon la revendication 1, caractérisée en ce que la structure de vannes (58) comprend

un corps de vannes (66),

un cylindre creux (72) placé en position centrale dans le corps de vannes (66),

une vanne (90) dans ce cylindre (72),

un canal (82,84) formé par le corps de vannes (66) et le cylindre (72), disposé autour du cylindre (72), et traversant la structure de vannes (58),

deux vannes ou plus (96) montées en parallèle dans ce canal,

une communication (76,85) entre le canal (82,84) et le cylindre (72), et

deux vannes ou plus (98) placées dans cette communication.

3. Installation de production d'énergie selon la revendication 1, caractérisée en ce que la structure de vannes comprend

un cylindre (72) qui traverse la structure,

une vanne (90) dans le cylindre (72),

deux canaux ou plus (82,84) formés autour du cylindre,

une vanne (96) dans chacun de ces canaux (82,84),

une communication (76,85) entre chacun de ces canaux (82,84) et le cylindre (72), et

une vanne (98) dans chacune de ces communications (76,85).

4. Installation de production d'énergie selon l'une quelconque des revendications 2 ou 3, caractérisée en ce que les vannes (96) dans le ou les canaux (82,84) se trouvant autour du cylindre, et les vannes (98) dans les communications (76, 85) entre le ou les canaux (82, 84) et le cylindre (72) sont équipées de disques de vannes (96b, 98b) qui sont montés sur une tige commune (100) et qui sont actionnés par un dispositif d'actionnement commun (106).

5. Installation de production d'énergie selon la revendication 4, caractérisée en ce que les disques de vanne (96b) dans les vannes (96) se trouvant dans le ou les canaux (82,84) autour du cylindre (72), peuvent être déplacés axialement sur la tige (100) et sont sollicités dans une direction par un ressort (108) qui retient le disque de vanne (96b) dans une position normale par rapport à la tige (100).

FIG.1

FIG.2

FIG. 3